# EUROPÄISCHE PATENTSCHRIFT

(11) **EP 3 431 325 B1**
(45) Veröffentlichungstag und Bekanntmachung des Hinweises auf die Patenterteilung: **13.01.2021**
(21) Anmeldenummer: 18178722.7
(22) Anmeldetag: 20.06.2018
(51) Int. Cl.: B60L 53/34, H01F 6/06, H02J 7/00

(54) **BODENELEMENT ZUM INDUKTIVEN LADEN**
FLOOR ELEMENT FOR INDUCTIVE CHARGING
ÉLÉMENT DE SOL DESTINÉ AU CHARGEMENT INDUCTIF

(30) Priorität: 18.07.2017 DE 202017104271 U
(43) Veröffentlichungstag der Anmeldung: 23.01.2019
(73) Patentinhaber: Geiger, Peter, 92318 Neumarkt (DE)
(72) Erfinder: Geiger, Peter, 92318 Neumarkt (DE)
(74) Vertreter: Lösch, Christoph Ludwig Klaus

(56) Entgegenhaltungen:
- US-A1- 2016 052 398
- Anne Beeldens: "INDUCTIVE CHARGING THROUGH CONCRETE ROADS: A BELGIAN CASE STUDY AND APPLICATION", , 23. Oktober 2016 (2016-10-23), XP055527177, DOI: 10.1016/j.jclepro.2018.04.103 Gefunden im Internet: URL:https://www.researchgate.net/publicati on/309380054_INDUCTIVE_CHARGING_THROUGH_CO NCRETE_ROADS_A_BELGIAN_CASE_STUDY_AND_APPL ICATION [gefunden am 2018-11-26]
- Conny Eck: "Betonfertigteile mit induktiver Ladetechnik", , 9 November 2015 (2015-11-09), XP055593411, Retrieved from the Internet: URL:http://web.archive.org/web/20160328195 750/https://www.beton.org/aktuell/news/det ails/betonfertigteile-mit-induktiver-ladet echnik/ [retrieved on 2019-06-03]
- Conny Eck: "Von der Leine gelassen", , 31 December 2015 (2015-12-31), XP055593634, Retrieved from the Internet: URL:http://context.heidelbergcement.de/aus gabe_02_15/von-der-leine-gelassen.html [retrieved on 2019-06-03]
- Anonymous: "Schnell und kostengünstig - Rohbau aus Fertigteilen", , 22 November 2011 (2011-11-22), pages 1-4, XP055641796, Retrieved from the Internet: URL:https://www.t-online.de/heim-garten/ba uen/id_51675658/schnell-und-kostenguenstig -rohbau-aus-fertigteilen.html [retrieved on 2019-11-12]

## Beschreibung

Die Erfindung betrifft ein Bodenelement zum induktiven Laden eines mit einer Sekundärspule ausgestatteten Elektrofahrzeugs sowie einen mit Betonpflastersteinen gepflasterten Fahrzeugstellplatz.

Für Fahrzeuge mit einem Elektromotorantrieb ist das sogenannte induktive Laden vorbekannt. Bei diesem wird kontaktlos Energie von einer stationär im Boden angebrachten Primärspule auf eine im Elektrofahrzeug angebrachten Sekundärspule übertragen und in einer Energiespeichervorrichtung (Akkubatterie) des Fahrzeugs gespeichert.

US 2016/052398 A1 beschreibt eine kanalförmige, dem Straßenverlauf folgende Vertiefung, in der eine Mehrzahl von hintereinander angeordneten Primärspulen angeordnet ist. Die Wände dieses Kanals sind aus Betonwerkstoff und verschlossen ist der Kanal mit einem der Fahrbahnoberfläche zugewandten Deckel.

Die Internetveröffentlichungen Conny Eck: "Betonfertigteile mit induktiver Ladetechnik", 09.11.2015, abgerufen am 03.06.2019 unter http://web.archive.org/web/20160328195750/https://www.beton.org/aktuell/ne ws/details/betonfertigteile-mit-induktiver-ladetechnik, und Conny Eck: "Von der Leine gelassen", 31.12.2015, abgerufen am 03.06.2019 unter http://context.heidelbergcement.de/ausgabe_02_15/von-der-leine-gelassen.html beschreiben ein Bodenelement zum induktiven Laden eines mit einer Sekundärspule ausgestatteten Elektrofahrzeugs. Die Primärspule dieses Bodenelements wird in Beton eingegossen und nach dem Aushärten im Bereich einer Bushaltestelle eingebaut.

Die Internetveröffentlichung "Schnell und kostengünstig - Rohbau aus Fertigteilen", 22.11.2011, abgerufen am 12.11.2019 unter https://www.t-online.de/heim-garten/bauen/id-51675658/schnell-und-kostenguenstigrohbau -aus-fertigteilen.html beschreibt, das Fertighäuser häufig aus Betonfertigteilen zusammengesetzt werden.

Der Erfindung liegt die Aufgabe zugrunde, ein besonders vorteilhaftes Bodenelement zum induktiven Laden bzw. einen entsprechenden Fahrzeugstellplatz anzubieten.

Die Aufgabe wird durch ein Bodenelement mit den Merkmalen des Anspruchs 1 bzw. durch einen Fahrzeugstellplatz mit den Merkmalen des Anspruchs 10 gelöst. Vorteilhafte Ausführungsformen sind in den Unteransprüchen beschrieben.

Das erfindungsgemäße Bodenelement zum induktiven Laden eines mit einer Sekundärspule ausgestatteten Elektrofahrzeugs weist eine Aufnahmeschale mit Seitenwänden aus einem Betonwerkstoff und eine in der Aufnahmeschale aufgenommene Primärspule auf.

Die Aufnahmeschale aus Betonwerkstoff bildet einen räumlich definierten Aufnahmeraum für die Primärspule. Die Primärspule kann darin sicher und räumlich exakt gelagert werden. Außerdem ist sie vor mechanischen und witterungsbedingten Beeinflussungen geschützt. Ferner ist die Aufnahmeschale vorgefertigt damit sie schnell und einfach vor Ort z.B. im Bereich eines Fahrzeugstellplatzes eingebaut werden kann.

Insbesondere eignet sich das Bodenelement zum flächenbündigen Einbau in einen gepflasterten Bereich.

Erfindungsgemäß weist die Aufnahmeschale einen Durchlass für ein Anschlusskabel der Primärspule auf. Auf diese Weise ist eine schnelle und unkomplizierte Versorgung der Primärspule mit elektrischer Energie möglich. In besonders vorteilhafter Weise ist der Durchlass als Bohrung durch eine Seitenwand der Aufnahmeschale ausgebildet. Dadurch kann das Anschlusskabel seitlich neben der Aufnahmeschale verlegt werden und in einem späteren Arbeitsschritt beispielsweise unter Betonpflastersteinen verdeckt werden.

In einer weiteren vorteilhaften Ausführungsform weist die Aufnahmeschale ferner einen Deckel auf, welcher die Aufnahmeschale verschließt. Auf diese Weise kann die Primärspule besonders sicher vor mechanischen und witterungsbedingten Einflüssen geschützt werden. Der Deckel kann hierbei aus einem Betonwerkstoff gefertigt sein. Es ist jedoch auch möglich, einen anderen Werkstoff für den Deckel zu verwenden. Insbesondere kann ein Werkstoff verwendet werden, der das sich zwischen der Primarspule und der Sekundärspule ausbildende magnetische Wechselfeld möglichst wenig schwächt. Auch kann der Deckel möglichst dünn ausgebildet sein, um den Abstand zwischen der Primarspule und der Sekundärspule möglichst gering zu halten.

In einer weiteren vorteilhaften Ausführungsform ist die Primärspule mit der Aufnahmeschale vergossen bzw. mit dieser verklebt. Auf diese Weise ist eine besonders lagesichere Aufnahme der Primärspule in der Aufnahmeschale möglich.

In einer weiteren vorteilhaften Ausführungsform ist die Aufnahmeschale als haubenförmige Aufnahmeschale ausgebildet. Mit anderen Worten besitzt die Aufnahmeschale eine Oberseite, die die Primärspule im eingebauten Zustand (haubenförmig) überdeckt. Auf diese Weise ist die Primärspule vor mechanischen und witterungsbedingten Beeinträchtigungen geschützt. Außerdem kann das Bodenelement dadurch optisch unauffällig in die Umgebung integriert sein.

Die Aufnahmeschale ist mehrteilig ausgebildet. Die mehrteilige Ausbildung erleichtert u. U. den Transport und den Einbau vor Ort. Insbesondere kann die Aufnahmeschale in vier Eckelemente unterteilt sein, die vor Ort zu einer Aufnahmeschale zusammengesetzt werden. In diese Aufnahmeschale wird anschließend die Primärspule eingelegt und über das Anschlusskabel an die benötigte elektrische Infrastruktur angeschlossen. In ähnlicher Weise ist es möglich, dass die Aufnahmeschale nicht nur aus Eckelementen, sondern auch aus Randelementen und ggf. Mittelelementen besteht, die vor Ort zu einer Aufnahmeschale kombiniert werden.

Wie bereits oben beschrieben kann der Durchlass für das Anschlusskabel als Bohrung ausgebildet sein, insbesondere bei einer mehrteiligen Aufnahmeschale kann der Durchlass jedoch auch zwischen zwei benachbarten Elementen der Aufnahmeschale (z.B. zwischen zwei benachbarten Eckelementen, zwischen zwei benachbarten Randelementen und/oder zwischen einem Eck- und einem Randelement) ausgebildet sein.

Das Bodenelement - genauer die Aufnahmeschale - weist insgesamt vier quaderförmige Fortsätze an mindestens zwei gegenüberliegenden Seitenwänden auf. Die Abmessungen dieser Fortsätze sind hierbei derart an die Abmessungen von Pflastersteinen, welche flächenbündig mit dem Bodenelement verlegbar sind, angepasst, dass ein gleichmäßiges Fugenbild erzielt werden kann. Mit anderen Worten sind die Abmessungen der quaderförmigen Fortsätze derart ausgewählt, dass diese mit den Abmessungen der zum Pflastern des Bereichs, in dem das Bodenelement eingebaut wird, verwendeten Betonpflastersteine korrespondieren. Auf diese Weise kann das Bodenelement auf optisch ansprechende Weise in eine gepflasterte Fläche (z.B. einen gepflasterten Fahrzeugstellplatz) integriert bzw. eingebunden werden.

Die Erfindung ist anhand von Ausführungsbeispielen in den Zeichnungsfiguren weiter erläutert, wobei gleiche Bezugszeichen gleiche bzw. gleichwirkende Komponenten bezeichnen. Es zeigen:
- Fig. 1: eine perspektivische Ansicht eines Bodenelements zum induktiven Laden;
- Fig. 2: eine Schnittansicht des Bodenelements aus Fig. 1;
- Fig. 3: eine Schnittansicht eines zweiten Bodenelements;
- Fig. 4: eine Draufsicht auf die einstückige Aufnahmeschale aus Fig. 1;
- Fig. 5: eine Draufsicht auf eine mehrteilige Aufnahmeschale;
- Fig. 6: eine Draufsicht auf eine weitere mehrteilige Aufnahmeschale;
- Fig. 7: eine Draufsicht auf eine mit Betonpflastersteinen gepflasterte Fläche, in der das Bodenelement aus Fig. 1 flächenbündig integriert ist;
- Fig. 8: eine Draufsicht auf eine weitere mit Betonpflastersteinen gepflasterte Fläche, in der ein weiteres Bodenelement flächenbündig integriert ist; und
- Fig. 9: eine Schnittansicht durch ein haubenförmiges Bodenelement.

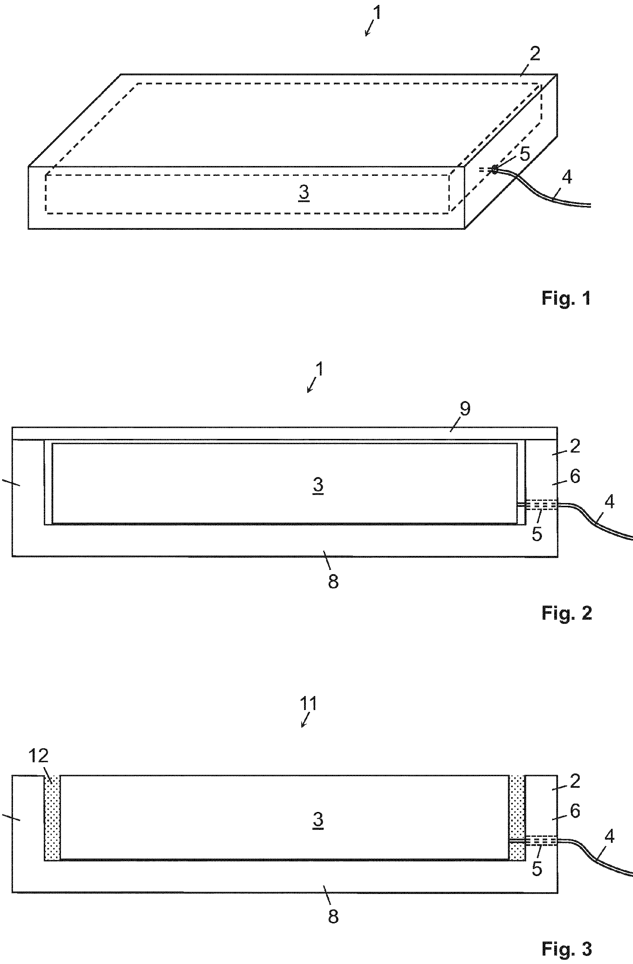

Fig. 1 zeigt eine perspektivische Ansicht eines Bodenelements 1 zum induktiven Laden. Das Bodenelement 1 besteht aus einer Aufnahmeschale 2 und einer Primärspule 3 und ist dazu ausgelegt, im Bereich eines Fahrzeugstellplatzes in den Boden eingebaut zu werden. Die Primärspule 3 ist in Fig. 1 gestrichelt dargestellt und ist innerhalb der Aufnahmeschale 2 positioniert, d.h. in die Aufnahmeschale 2 aufgenommen. Die Primärspule 3 weist ein Anschlusskabel 4 auf, das durch einen als Bohrung ausgebildeten Durchlass aus der Aufnahmeschale 2 herausgeführt ist. Die Aufnahmeschale 2 ist aus einem Betonwerkstoff gefertigt und besitzt eine quaderförmige Außenform. Unter der Primärspule 3 wird hierbei nicht nur das elektronische Bauteil "Primärspule" verstanden, sondern die gesamte Baugruppe, die neben dem elektronischen Bauteil auch die nötigen untergeordneten Hilfsbauteile und ggf. eine Ummantelung bzw. Hülle aufweist.

Fig. 2 zeigt eine Schnittansicht durch das in Fig. 1 dargestellte Bodenelement 1. Die Aufnahmeschale 2 weist Seitenwände 5 und 7 sowie eine Unterseite 8 aus Betonwerkstoff auf. Ein Deckel 9 verschließt die Aufnahmeschale 2, sodass ein abgeschlossener Aufnahmeraum gebildet wird, in dem die Primärspule 3 aufgenommen ist. Die Abmessungen des Aufnahmeraums sind hierbei an die Außenabmessungen der Primärspule 3 angepasst. In den vorliegend beschriebenen Ausführungsformen besitzt die Primärspule 3 - und damit auch der Aufnahmeraum innerhalb der Aufnahmeschale 2 - eine quaderförmige Form. Es ist jedoch auch möglich, eine scheiben- oder flachzylindrische Primärspule 3 zu verwenden. Die Form des Aufnahmeraums würde dann entsprechend ebenfalls scheiben- bzw. flachzylindrisch ausgebildet sein.

Fig. 3 zeigt eine Schnittansicht durch ein weiteres Bodenelement 11. Die hierbei verwendete Aufnahmeschale 2 unterscheidet sich nicht von der in Fig. 1 bis Fig. 2 gezeigten. Es wurde lediglich auf den Deckel 9 verzichtet. Stattdessen ist die Primärspule 3 in einer Vergussmasse 12 eingebettet.

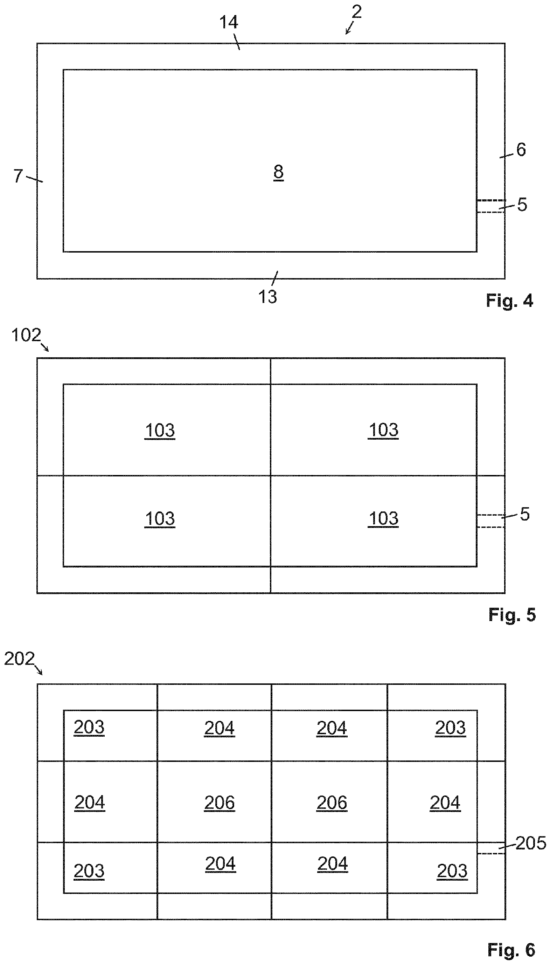

Fig. 4 zeigt eine Draufsicht auf die Aufnahmeschale 2 aus Fig. 1 bis Fig. 3. Die Aufnahmeschale 2 weist insgesamt vier Seitenwände 6, 7, 13 und 14 sowie eine Unterseite 8 auf. In der Seitenwand 6 ist ein als Bohrung ausgebildeter Durchgang 5 ausgebildet. Durch den Durchgang 5 kann ein Anschlusskabel 4 der Primärspule 3 geführt werden. Die Aufnahmeschale 2 ist einstückig, d.h. einteilig aus einem Betonwerkstoff, ausgebildet und kann ein vorgefertigtes Betonformteil sein.

Fig. 5 zeigt eine mehrteilige Aufnahmeschale 102. Die mehrteilige Aufnahmeschale 102 besteht aus insgesamt vier Eckelementen 103. Die vier Eckelemente 103 sind jeweils separat voneinander als Betonsteinelement ausgebildet und bilden zusammen die Aufnahmeschale 102.

Fig. 6 zeigt eine weitere mehrteilige Aufnahmeschale 202. Die mehrteilige Aufnahmeschale 202 besteht aus insgesamt vier Eckelementen 203, sechs Randelementen 204 und zwei Mittenelementen 206. Sämtliche Elemente der Aufnahmeschale 202 sind jeweils separat voneinander als Betonsteinelement ausgebildet und bilden zusammen die Aufnahmeschale 202. Der Durchlass 205 zur Durchführung eines Anschlusskabels 4 ist zwischen einen Eckelement 203 und einem Randelemente 204 ausgebildet. Genauer weist das in Fig. 6 rechts unten dargestellte Eckelement 203 in dessen Kantenbereich eine Ausnehmung auf, die als Durchlass 205 dient.

Sowohl die einstückige Aufnahmeschale 2 als auch die mehrteiligen Aufnahmeschalen 102 und 202 sind aus Betonwerkstoff gefertigt und weisen einen Aufnahmeraum auf, in den die Primärspule 3 sicher und exakt gelagert werden kann. Der Durchlass 5 bzw. 205 sorgt für eine einfache Versorgungsmöglichkeit mit elektrischer Energie. Außerdem kann das Bodenelement 1 bzw. 11 auf einfache Weise flächenbündig mit einer gepflasterten Fläche eingebaut werden.

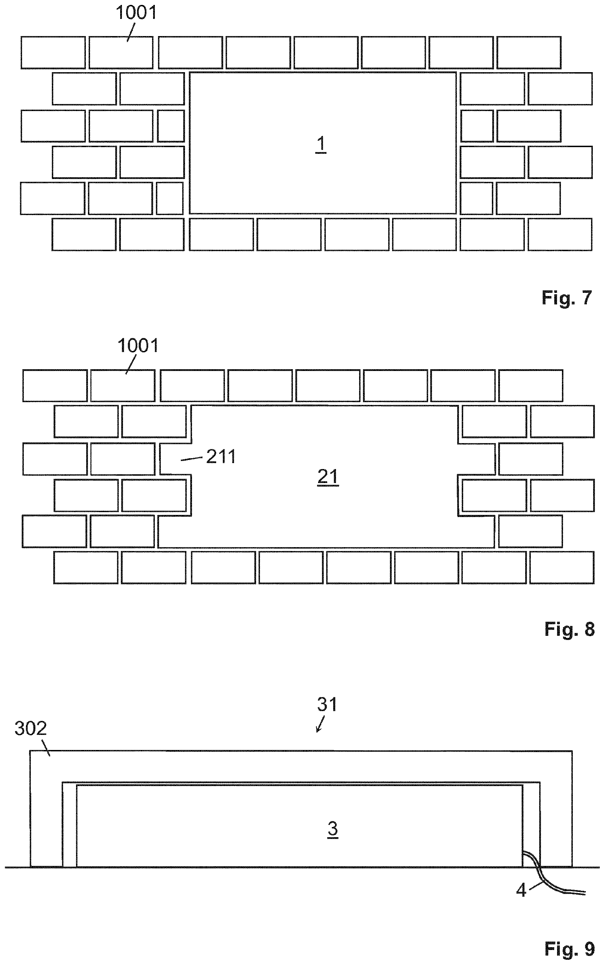

Fig. 7 zeigt einen Ausschnitt einer mit Betonpflastersteinen 1001 gepflasterte Fläche. In die gepflasterte Fläche ist das Bodenelement 1 flächenbündig integriert. Das Bodenelement 1 weist eine quaderförmige Außenform auf. Die gepflasterte Fläche kann beispielsweise ein Fahrzeugstellplatz sein.

Fig. 8 zeigt einen Ausschnitt einer weiteren mit Betonpflastersteinen 1001 gepflasterte Fläche. Das in Fig. 8 dargestellte Bodenelement 21 ist ebenfalls flächenbündig mit den Betonpflastersteinen 1001 eingebaut und weist insgesamt vier quaderförmige Fortsätze 211 auf. Die Fortsätze 211 sind an zwei gegenüberliegenden Seitenwänden der Aufnahmeschale ausgebildet. Die Abmessungen der Fortsätze 211 sind derart an die Abmessungen der Betonpflastersteine 1001 angepasst, dass ein gleichmäßiges Fugenbild erzielt werden kann.

Fig. 9 zeigt ein Bodenelement 31, welches eine Aufnahmeschale 302 aufweist, die haubenförmig ausgebildet ist. Die haubenförmige Aufnahmeschale 302 umschließt die Primärspule 3, sodass die Primärspule seitlich und von oben geschützt ist. Das Anschlusskabel 4 wird in der in Fig. 9 dargestellten Ausführungsform im Untergrund geführt. Es ist jedoch auch möglich an der Seitenwand der Aufnahmeschale 302 einen Durchlass 5 vorzusehen. Das in Fig. 9 dargestellte Bodenelement 31 ist nach unten offen. Es ist jedoch auch möglich, die Unterseite durch ein zusätzliches Element (z.B. analog zum Deckel 9) zu verschließen.

### BEZUGSZEICHENLISTE

- 1, 11, 21, 31: Bodenelement
- 2, 102, 202, 302: Aufnahmeschale
- 3: Primärspule
- 4: Anschlusskabel
- 5, 205: Durchlass
- 6, 7: Seitenwand
- 8: Unterseite
- 9: Deckel
- 12: Vergussmasse
- 13, 14: Seitenwand
- 103, 203: Eckelement
- 204: Randelement
- 206: Mittenelement
- 211: quaderförmiger Fortsatz
- 1001: Betonpflasterstein

## Patentansprüche

1. Bodenelement (1, 11, 21, 31) zum induktiven Laden eines mit einer Sekundärspule ausgestatteten Elektrofahrzeugs, wobei das Bodenelement (1, 11, 21, 31) aufweist:
- eine Aufnahmeschale (2, 102, 202, 302) mit Seitenwänden (6, 7, 13, 14) aus einem Betonwerkstoff; und
- eine in der Aufnahmeschale (2, 102, 202, 302) aufgenommene Primärspule (3), wobei
- die Aufnahmeschale (102, 202) einen Durchlass (5, 205) für ein Anschlusskabel (4) der Primärspule (3) aufweist,
**dadurch gekennzeichnet, dass**
- die Aufnahmeschale (102, 202) eine vorgefertigte Aufnahmeschale (2, 102, 202, 302) ist;
- genau eine Primärspule (3) in der Aufnahmeschale (102, 202) aufgenommen ist;
- das Bodenelement (1, 11, 21, 31) insgesamt vier quaderförmige Fortsätze (211) an zwei gegenüberliegenden Seitenwänden aufweist;
- die Aufnahmeschale (102, 202) mehrteilig ausgebildet ist;
- die Aufnahmeschale (102, 202) vier, jeweils separat voneinander als Betonsteinelement ausgebildete Eckelemente (103, 203) aufweist; und
- die Abmessungen der Fortsätze mit Abmessungen von Pflastersteinen, welche flächenbündig mit dem Bodenelement verlegbar sind, korrespondieren.

2. Bodenelement nach Anspruch 1, wobei der Durchlass (5) als Bohrung, insbesondere als Bohrung durch eine Seitenwand (6), ausgebildet ist.

3. Bodenelement nach einem der vorhergehenden Ansprüche ferner aufweisend einen Deckel (9), welcher die Aufnahmeschale (2) verschließt.

4. Bodenelement nach Anspruch 3, wobei der Deckel (9) aus einem Betonwerkstoff gefertigt ist.

5. Bodenelement nach einem der vorhergehenden Ansprüche, wobei die Primärspule (3) mit der Aufnahmeschale (102, 202) vergossen und/oder verklebt ist.

6. Bodenelement nach einem der vorhergehenden Ansprüche, wobei die Aufnahmeschale (202) Randelemente (204) aufweist.

7. Bodenelement nach einem der vorhergehenden Ansprüche, wobei die Aufnahmeschale (202) Mittenelement (206) aufweist.

8. Bodenelement nach einem der vorhergehenden Ansprüche, wobei der Durchlass (205) zwischen benachbarten Eckelementen (203) und/oder Randelementen (204) ausgebildet ist.

9. Mit Betonpflastersteinen gepflasterter Fahrzeugstellplatz, in dem das Bodenelement (1, 11, 21, 31) nach einem der vorhergehenden Ansprüche flächenbündig integriert ist.

## Claims

1. Floor element (1, 11, 21, 31) for inductively charging an electric vehicle which is equipped with a secondary coil, wherein the floor element (1, 11, 21, 31) has:
- a holding tray (2, 102, 202, 302) with side walls (6, 7, 13, 14) composed of concrete material; and
- a primary coil (3) which is held in the holding tray (2, 102, 202, 302), wherein
- the holding tray (102, 202) has a passage (5, 205) for a connection cable (4) of the primary coil (3), **characterized in that**
- the holding tray (102, 202) is a prefabricated holding tray (2, 102, 202, 302);
- precisely one primary coil (3) is held in the holding tray (102, 202);
- the floor element (1, 11, 21, 31) has a total of four cuboidal projections (211) on two opposite side walls;
- the holding tray (102, 202) is of multipartite design;
- the holding tray (102, 202) has four corner elements (103, 203) which are each formed separately from one another as concrete block elements; and
- the dimensions of the projections correspond to dimensions of paving stones which can be laid flush with the floor element.

2. Floor element according to Claim 1, wherein the passage (5) is designed as a bore, in particular as a bore through a side wall (6).

3. Floor element according to either of the preceding claims, further having a cover (9) which closes the holding tray (2).

4. Floor element according to Claim 3, wherein the cover (9) is manufactured from a concrete material.

5. Floor element according to one of the preceding claims, wherein the primary coil (3) is cast with and/or adhesively bonded to the holding tray (102, 202).

6. Floor element according to one of the preceding claims, wherein the holding tray (202) has edge elements (204) .

7. Floor element according to one of the preceding claims, wherein the holding tray (202) has central elements (206).

8. Floor element according to one of the preceding claims, wherein the passage (205) is formed between adjacent corner elements (203) and/or edge elements (204) .

9. Vehicle parking space which is paved with concrete paving stones, the floor element (1, 11, 21, 31) according to one of the preceding claims being integrated in a flush manner in the said parking space.

## Revendications

1. Élément de sol (1, 11, 21, 31) destiné au chargement inductif d'un véhicule électrique équipé d'une bobine secondaire, l'élément de sol (1, 11, 21, 31) comprenant :
- une coque de logement (2, 102, 202, 302) munie de parois latérales (6, 7, 13, 14) en un matériau à base de béton ; et
- une bobine primaire (3) logée dans la coque de logement (2, 102, 202, 302),
- la coque de logement (102, 202) comprenant un passage (5, 205) pour un câble de raccordement (4) de la bobine primaire (3),
**caractérisé en ce que**
- la coque de logement (102, 202) est une coque de logement (2, 102, 202, 302) préfabriquée ;
- exactement une bobine primaire (3) est logée dans la coque de logement (102, 202) ;
- l'élément de sol (1, 11, 21, 31) comprend au total quatre prolongements parallélépipédiques (211) sur deux parois latérales opposées ;
- la coque de logement (102, 202) est configurée à plusieurs parties ;
- la coque de logement (102, 202) comprend quatre éléments de coin (103, 203), chacun configurés séparément les uns des autres sous la forme de bloc de béton ; et
- les dimensions des prolongements correspondent à des dimensions de pavés qui peuvent être placés en affleurement de surface avec l'élément de sol.

2. Élément de sol selon la revendication 1, dans lequel le passage (5) est configuré sous la forme d'un alésage, notamment sous la forme d'un alésage au travers d'une paroi latérale (6).

3. Élément de sol selon l'une quelconque des revendications précédentes, comprenant en outre un couvercle (9), qui ferme la coque de logement (2).

4. Élément de sol selon la revendication 3, dans lequel le couvercle (9) est fabriqué en un matériau à base de béton.

5. Élément de sol selon l'une quelconque des revendications précédentes, dans lequel la bobine primaire (3) est enrobée et/ou collée avec la coque de logement (102, 202).

6. Élément de sol selon l'une quelconque des revendications précédentes, dans lequel la coque de logement (202) comprend des éléments de bord (204).

7. Élément de sol selon l'une quelconque des revendications précédentes, dans lequel la coque de logement (202) comprend des éléments centraux (206).

8. Élément de sol selon l'une quelconque des revendications précédentes, dans lequel le passage (205) est formé entre des éléments de coin (203) et/ou des éléments de bord (204) voisins.

9. Emplacement de stationnement de véhicule pavé avec des pavés en béton, dans lequel l'élément de sol (1, 11, 21, 31) selon l'une quelconque des revendications précédentes est intégré en affleurement de surface.
